# EUROPEAN PATENT APPLICATION

(11) **EP 2 712 533 A2**
(43) Date of publication of application: **02.04.2014**
(21) Application number: 12755066.3
(22) Date of filing: 08.03.2012
(51) Int. Cl.: A47L 17/08

(54) **MULTIPURPOSE CLEANING PAD**

(30) Priority: 08.03.2011 KR 20110020227
(71) Applicant: Cho, Dae Hwan, Seoul 142-100 (KR)
(72) Inventor: Cho, Dae Hwan, Seoul 142-100 (KR)
(74) Representative: Meissner, Bolte & Partner
(86) International application number: PCT/KR2012/001707
(87) International publication number: WO 2012/121557

(57) **Abstract**

The present application is directed to a multi-purpose cleaning pad, comprising a water-absorbing layer 10 made from any one of materials comprising CELLUFORCE, PVA sponge, natural pulp, synthetic fabric including superfine fiber, wool, silk, cotton, acryl fiber, and viscose rayon; and a dirt-removing layer 20 attached to a face of said water-absorbing layer 10 using adhesive 30 and made from any one of materials comprising melamine resin foam-sponge, nylon non-woven fabric, polyurethane, Velcro non-woven fabric, stainless rolled fiber, copper fiber and polyester.

## Description

### Field of the Invention

The present invention is related to a multi-purpose cleaning pad. More particularly, the present invention is related to the multi-purpose cleaning pad, wherein the stacking structure of the cleaning pad is improved to thereby increase the water-absorbing capacity and the restoration of the cleaning pad. Accordingly, the present invention makes it convenient to use and store the cleaning pad and makes it possible to perform the surface scrubbing and the dirt removing in an effective way. Also, the cleaning pad of the present invention has the excellent durability due to its material property, and thus it is not easily damaged even after frequent use.

### Background of the Invention

Generally, a cleaning pad used in home and restaurant is made from synthetic resin, such as nylon non-woven fabric and polyurethane, or metallic pad, such as aluminum wire or stainless wire. All of these cleaning pads have the common characteristic that they are superior in scrubbing dirt on a dish surface like a brush because their materials have hard or mid-rough property, whereas they are inferior in retaining water because of coarse texture. Accordingly, the conventional cleaning pad needs the continuous supply of water or the frequent provision of detergent while cleaning dishes, so that it leads to excessive waste of water or detergent. A conventional cleaning pad made from cloth or sponge is superior in retaining water, whereas it is inferior in removing dirt on a dish surface because it has softness, so that it is difficult to perform pure cleansing.

Recently, various kinds of cleaning pads have been provided, which are made from sponge having micro-texture of melamine resin foam. However, these products comprise a unitary piece of melamine resin foam sponge, and thus they are inconvenient in use because a separate cloth is needed for removing water or remnant after cleaning the object.

### Summary of the Invention

In order to resolve above-described problems, the present invention provides a multi-purpose cleaning pad, wherein one or more water-absorbing layers and one or more dirt-removing layers are attached to each other. The cleaning pad of the present invention makes it possible to clean water or remnant on an object or an area to be cleaned, so that it has an excellent cleaning performance. Also, the cleaning pad of the present invention is not easily damaged due to its durability and its material property.

The present invention provides the multi-purpose cleaning pad comprising: a water-absorbing layer made from any one of materials comprising CELLUFORCE, PVA sponge, natural pulp, synthetic fabric including superfine fiber, wool, silk, cotton, acryl fiber, and viscose rayon; and a dirt-removing layer attached to a face of said water-absorbing layer using adhesive and made from any one of materials comprising melamine resin foam-sponge, nylon non-woven fabric, polyurethane, Velcro non-woven fabric, stainless rolled fiber, copper fiber and polyester.

### Advantage of the Invention

Accordingly, the multi-purpose cleaning pad of the present invention, which comprises one or more water absorbing layers and one or more dirt-removing layers attached to each other, can clean water or remnant on an object or an area to be cleaned, so that it is excellent in cleaning performance. Also, the cleaning pad of the present invention is not easily damaged due to its durability and its material property.

Further, the multi-purpose cleaning pad of the present invention may be applied to a mop, a scrub brush and a rag depending on its use.

### Brief Description of the Invention

Figure 1 is a cross-sectional view of a cleaning pad according to an embodiment of the present invention.
Figure 2 is a cross sectional view of a cleaning pad according to the other embodiment of the present invention.

### Detailed Description of the Invention

The present invention will be detailed with reference to the drawings attached.

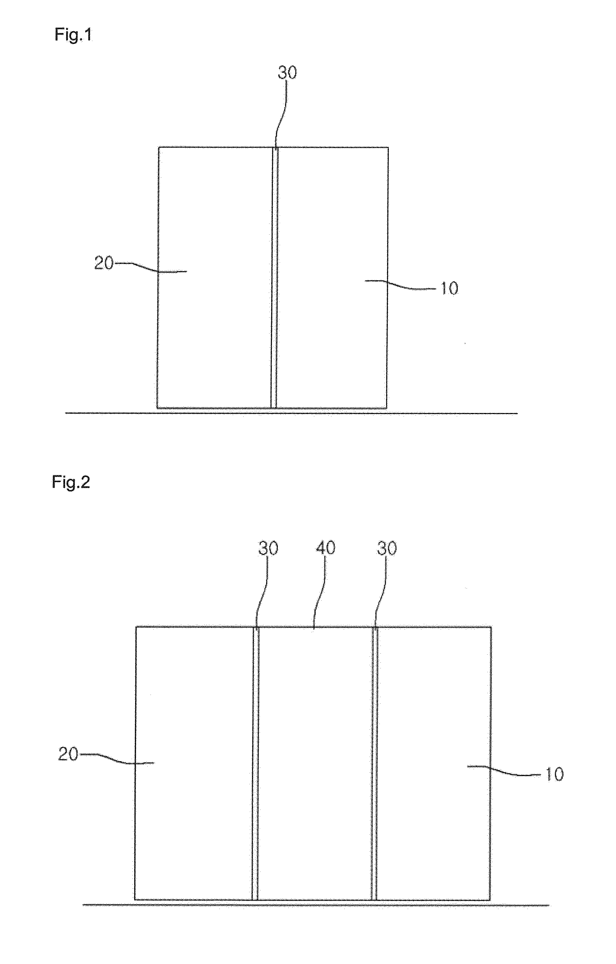

Referring to Figure 1, a multi-purpose cleaning pad of the present invention comprises a water-absorbing layer 10, a dirt-removing layer 20 and an adhesive layer 30 disposed between the water absorbing layer and the dirt-removing layer 20, wherein the water-absorbing layer is excellent in the water absorption and eco-friendly and wherein the dirt-removal layer 20 is attached to a face of said water-absorbing layer 10 for cleaning an area to be cleaned.

The water-absorbing layer 10 is made from any one of materials comprising CELLUFORCE, PVA sponge, natural pulp, synthetic fabric including superfine fibers, wool, silk, cotton, acryl fiber, viscose rayon etc.

It is preferred that the water-absorbing layer 10 is made from material that is excellent in water absorption, flexibility and restoration.

The dirt-removing layer 20 is made from any one of materials comprising melamine resin foam-sponge, nylon non-woven fabric, polyurethane, Velcro non-woven fabric, stainless rolled fiber, copper fiber, polyester etc.

The dirt removing layer 20 can readily remove dirt or stain only by repetitive scrubbing due to its material property.

The adhesive layer 30 is evenly applied to the water-absorbing layer 10 or the dirt-removing layer 20 to thereby attach the layers to each other; otherwise, it is possible to attach the layers in different ways.

The water-absorbing layer 10 and the dirt removing layer 20 are alternately attached in a widthwise direction for use.

The operation of the cleaning pad according to the present invention will be detailed below. The cleaning pad may be used for cleaning dirt and stain on dishes, tiles and home appliances. When removing water or stain, moisture remained in the cleaning pad should be removed first, and then the water-absorbing layer 10 absorbs water while making the cleaning pad to contact an object or an area to be cleaned. Thereafter, the dirt-removing layer 20 contacts the object or the area to be cleaned to thereby remove stain.

When removing dirt, the object or the area is cleaned using rag or a brush at an initial stage. Thereafter, the cleaning pad is provided with small amount of water by soaking it, and then it is pressed against the object or the area. Then, the dirt-removing layer 20 is used for scrubbing a dirt-bearing area many times. Here, remnant generated from the dirt is scrubbed and removed by using the water-absorbing layer 10. In this way, the dirt may be removed from the object or the area to be cleaned. As the layers in the cleaning pad are arranged in the widthwise direction, it is possible to readily remove dirt without exertion of strong force. The water-absorbing layer 10 and the dirt-removing layer 20 are alternately arranged, so that it is possible to remove dirt and its remnant at the same time by friction. Thus, the cleaning operation may be accomplished in a short time.

Referring to Figure 2, a multi-purpose cleaning pad of the present invention comprises a cushion layer 40 attached between the water-absorbing layer 10 and the dir-removing layer 20 using adhesive 30.

The cushion layer 40 comprises CELLUFORCE, sponge, synthetic resin, polyurethane foam, etc.

The cushion layer 40 may effectively stick dirt or hair on itself by means of frictional heat that is generated by making the cushion layer 40 to contact the object or the area to be cleaned.

The cushion layer 40 can be quickly restored to its original shape when removing moisture there-from, so that it is excellent in restoration. The cushion layer 40 is disposed between the water-absorbing layer 10 and the dirt-removing layer 20 and the shrinkage/the restoration is attained in a natural way, so that it is convenient to use the cleaning pad. Also, it is possible to increase the adhesiveness when attaching the cushion layer 40 between the water-absorbing layer 10 and the dirt-removing layer 20.

As described herein above, many changes and modifications may be possible within the claim scope of the present invention. However, one of ordinary skill in the art may understand that such changes and modification fall under the claim scope of the present invention, unless any significant effect is presented due to the changes and the modifications.

### Explanation of mark

| | | | |
|---|---|---|---|
| 10: | water-absorbing layer | 20: | dirt-removed layer |
| 30: | adhesive layer | 40: | cushion layer |

## Claims

1. A multi-purpose cleaning pad comprising:
a water-absorbing layer 10 made from any one of materials comprising CELLUFORCE, PVA sponge, natural pulp, synthetic fabric including superfine fiber, wool, silk, cotton, acryl fiber, and viscose rayon; and
a dirt-removing layer 20 attached to a face of said water-absorbing layer 10 using adhesive 30 and made from any one of materials comprising melamine resin foam-sponge, nylon non-woven fabric, polyurethane, Velcro non-woven fabric, stainless rolled fiber, copper fiber and polyester.

2. The multi-purpose cleaning pad as claimed in claim 1, further comprising a cushion layer 40 attached between said water-absorbing layer 10 and the dirt-removing layer 20 using the adhesive 30, wherein the cushion layer 40 is made from any one of materials comprising CELLUFORCE, sponge, synthetic resin, and polyurethane foam.
